(19) Europäisches Patentamt
European Patent Office
Office européen des brevets

(11) **EP 2 562 081 B1**

(12) **EUROPÄISCHE PATENTSCHRIFT**

(45) Veröffentlichungstag und Bekanntmachung des Hinweises auf die Patenterteilung:
**15.04.2015   Patentblatt 2015/16**

(51) Int Cl.:
*F16C 19/16* (2006.01)       *F03D 1/06* (2006.01)
*F16C 35/04* (2006.01)       *F16C 33/58* (2006.01)

(21) Anmeldenummer: **11006947.3**

(22) Anmeldetag: **25.08.2011**

(54) **Nabe einer Windkraftanlage und Vorrichtung zur Verstellung mehrerer Elemente relativ zueinander**

Hub of a wind turbine and positioning device for several elements relative to each other

Moyeu d'éolienne et dispositif de positionnement rélatif de plusieurs éléments entre eux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.02.2013   Patentblatt 2013/09**

(73) Patentinhaber: **IMO Holding GmbH**
**91350 Gremsdorf (DE)**

(72) Erfinder: **Hubertus, Frank**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
WO-A1-00/61942       DE-A1- 2 855 025
US-A- 6 015 264       US-A1- 2009 311 104

• **NSK Ltd.: "Large-Size Rolling Bearings", , 1989, Seite 32, XP002669809, Japan Gefunden im Internet: URL:http: //www.nskamericas.com/cps/rde/xbc r/na_ en/NSK_CAT_E125f.pdf [gefunden am 2012-02-16]**

## Beschreibung

Die Erfindung richtet sich auf eine Vorrichtung zur mehrachsigen Verstellung mehrerer Elemente relativ zueinander, wobei die Elemente über mittenfreie Großwälzlager mit unterschiedlich orientierten Drehachsen gegeneinander verdrehbar sind, insbesondere auf eine Nabe einer Windkraftanlage mit um ihre Längsachsen verstellbaren Rotorblättern, die mittels Blattlagern an der Nabe gelagert sind.

Moderne Großwälzlager haben bei manchen Anwendungen Durchmesser in der Größenordnung von mehr als 2 Metern - Anwendungsfälle mit einem Durchmesser von 5 oder gar 8 Metern sind keine Seltenheit mehr. Ein Beispiel hierfür sind u.a. moderne Windkraftanlagen, deren Windräder immer größer gebaut werden, um die Leistungsfähigkeit zu steigern. Je größer dabei der Durchmesser derartiger Lager ist, um so wichtiger ist deren Steifigkeit, denn nur minimale Verformungen der Lagerringe verändern den Druck auf die Wälzkörper und führen dann nicht nur zu erhöhten Verlusten, sondern reduzieren auch ihre erzielbare Betriebsdauer. Andererseits bedingt eine erhöhte Steifigkeit auch eine erhöhte Dicke der Ringe und damit natürlich auch eine größere Masse, also auch ein größeres Gewicht. Da dies in vielerlei Anwendungsfällen nicht hinnehmbar ist, wird manchmal die Anschlußkonstruktion selbst zur Versteifung herangezogen; dies ändert aber substantiell auch nicht viel, weil dann das erhöhte Gewicht eben bei der Anschlußkonstruktion auftritt, was in den meisten Fällen die selben Nachteile mit sich bringt. Dies trifft in besonderem Umfang bei Windkraftanlagen zu, wo mehrere Großwälzlager verbaut werden, einmal als Gondel- oder Maschinenhauslager, ein andermal als Haupt- oder Rotorlager für das rotierende Windrad, und schließlich in Form von Blattlagern zur Anstellung der Rotorblätter entsprechend der Windgesdchwindigkeit.

Das Dokument US-A-6015264 offenbart eine Nabe mit einer Vorrichtung zur Verstellung mehrerer Elemente relativ zueinander.

Aus den Nachteilen des beschriebenen Standes der Technik resultiert das die Erfindung initiierende Problem, eine gattungsgemäße Anordnung, insbesondere Verstellvorrichtung oder Nabe einer Windkraftanlage, derart weiterzubilden, dass die Steifigkeit der Lager auch bei höchsten Beanspruchungen gewährleistet bleibt, während gleichzeitig die dafür erforderliche Masse möglichst gering gehalten sein soll.

Die Lösung dieses Problems gelingt bei einer gattungsgemäßen Verstellvorrichtung dadurch, dass die verstellbaren Elemente, insbesondere Rotorblätter einer Windkraftanlage, über mittenfreie Großwälzlager mit unterschiedlich orientierten Drehachsen gegeneinander verdrehbar sind, die Elemente, insbesondere Rotorblätter einer Windkraftanlage, über mittenfreie Großwälzlager mit unterschiedlich orientierten Drehachsen gegeneinander verdrehbar sind, wobei wenigstens zwei mittenfreie Großwälzlager nur über jeweils einen eigenen Ring verfügen, während ihre dem gegenüber verdrehbaren, doppelt zusammenhängenden Teile durch Bearbeiten oder Formgebung eines gemeinsamen Grundkörpers gebildet und dadurch miteinander vereinigt sind, insbesondere durch Bearbeiten oder Formgebung des Nabenkörpers einer Windkraftanlage. Bei der Nabe einer Windkraftanlage sind die Außenringe wenigstens zweier Blattlager einstückig mit dem Nabenkörper ausgebildet, so dass wenigstens je eine Laufbahn mehrerer Blattlager mit unterschiedlich orientierten Drehachsen an einem gemeinsamen Nabenkörper ausgebildet ist.

Die Erfindung wendet sich dabei ab von herkömmlichen Großwälzlagern mit zwei zueinander konzentrischen Ringen, die sodann mit der jeweiligen Anschlußkonstruktion verschraubt werden. Denn auch derartige Verschraubungen stellen keine völlig starre Verbindung dar wie bspw. eine Verschweißung und bedingen andererseits auf Seiten der Anschlußkonstruktion dicke Ringe oder Platten zur Erzeugung der notwendigen Steifigkeit. Statt dessen nutzt die Erfindung die Tatsache, dass in bestimmten Fällen mehrere benachbarte Lager vorhanden sind, die aber unterschiedlich gerichtete Drehachsen aufweisen; indem jeweils ein rundum laufendes Teil dieser Lagerungen zu einem gemeinsamen Körper "verschmolzen" wird, ergibt sich dadurch ein dreidimensional gewölbtes Bauteil, wobei solche Wölbungen auch bei dünnen, d.h. wandartigen Bauteilen jeweils eine sehr steife Konstruktion darstellen, insbesondere wenn sie doppelt konvex gewölbt sind wie bspw. die Oberfläche einer Kugel, oder - je nach Blickrichtung - doppelt konkav gewölbt sind wie bspw. die Innenfläche einer Hohlkugel. Denn (Hohl-) Kugeln sind ein topographisch exakt definiertes Gebilde und daher kaum verformbar, also äußerst stabil. Das bedeutet, dass durch Ausformung eines derartigen, beiden oder allen Großwälzlagern gemeinsamen Bauteiles dieselben sich gegenseitig stabilisieren, d.h., es sind keine zusätzlichen Massen zur Stabilisierung erforderlich, sondern die ohnehin vorhandenen Massen der beteiligten Großwälzlager selbst tragen größtenteils zu der betreffenden Aussteifung bei, und zwar unmittelbar, also ohne Zwischenschaltung von weiteren, ggf. elastisch wirkenden Bauteilen wie bspw. Schrauben.

Bei der Erfindung ist je eine Laufbahn mehrerer Großwälzlager mit unterschiedlich orientierten Drehachsen durch Bearbeiten oder Formgebung eines gemeinsamen Grundkörpers gebildet, insbesondere durch Bearbeiten oder Formgebung des Nabenkörpers einer Windkraftanlage. Indem solchenfalls der erfindungsgemäße Grundkörper nicht nur mit je einem Ring für ein Großwälzlager kombiniert ist, sondern sogar auch die jeweiligen Laufbahnen direkt in diesen Grundkörper eingearbeitet sind, gibt es zwischen den umlaufenden Wälzkörperreihen weder Spalte noch flexible Elemente, was zu einer maximalen Steifigkeit der Gesamtkonstruktion führt.

Indem der gemeinsame Grund- oder Nabenkörper hohl oder hülsenförmig ausgebildet ist, insbesondere entsprechend einer - mit Durchbrechungen versehenen - Mantelfläche eines punkt- oder rotationssymmetrischen Körpers, kann seine Masse minimiert werden, ohne dass darunter die Formstabilität zu leiden hätte.

Es liegt im Rahmen der Erfindung, dass eine Laufbahn des Grund- oder Nabenkörpers in einen konkaven Oberflächenbereich desselben eingearbeitet ist. In einen solchen Oberflächenbereich läßt sich die äußere Laufbahn eines Großwälzlagers integrieren, insbesondere indem ein eine Laufbahn aufweisender Bereich des Grund- oder Nabenkörpers durch einen konkav gewölbten Bereich im Bereich der Innenseite einer den Mantel eines hohl oder hülsenförmig ausgebildeten Grund- oder Nabenkörpers vorzugsweise vollständig durchsetzenden Ausnehmung gebildet ist.

Die Erfindung empfiehlt, an dem gemeinsamen Grund- oder Nabenkörper neben einer Laufbahn für die Wälzkörper je eines Wälzlagers, insbesondere Blattlagers, eine vorzugsweise in sich geschlossene Reihe von Zähnen vorzusehen. Dadurch ist die Möglichkeit einer Relativverstellung der verschiedenen Lager geschaffen, insbesondere mittels in diese Zahnreihe eingreifender Ritzel, Zahnräder od. dgl.

Weitere Vorteile ergeben sich dadurch, dass wenigstens eine Zahnreihe gegenüber der betreffenden Laufbahn parallel zu der betreffenden Drehachse verschoben ist, vorzugsweise in Richtung zum Innenraum bzw. Zentrum des Grundkörpers oder der Nabe hin. Solchenfalls ist die tragende Kräfte übernehmende Wälzkörperreihe so weit als möglich in Richtung auf das zu verstellende Drehteil verlagert.

Ferner sollte wenigstens eine Zahnreihe gegenüber der betreffenden Laufbahn radial zu der betreffenden Drehachse verschoben sein, vorzugsweise in Richtung zu der betreffenden Drehachse hin. Eine solche Konstruktion erlaubt es bspw., den gegenüber dem Grundkörper verdrehbaren Ring neben der Verzahnung anzuordnen, was konstruktiv von Vorteil sein kann.

Wenn die Zahnreihe gerade verzahnt ist, so können damit gerade verzahnte Ritzel oder Zahnräder kämmen. Eine gerade Verzahnung läßt sich aber zumeist mit geringstmöglichem Aufwand herstellen.

Bevorzugt ist an dem gemeinsamen Grund- oder Nabenkörper konzentrisch zu jeder Laufbahn für je ein Blattlager zusätzlich je eine Verankerung oder Anlauffläche für wenigstens eine Dichtung vorgesehen, insbesondere gegenüber dem Grund- oder Nabenkörper nach außen verschoben, also von dessen Zentrum weg. Durch dort eingesetzte Dichtungen kann der Innenraum eines hohlen Grundkörpers im Bereich des Übergangs zu den angeschlossenen Drehteilen nach außen hin abgeschlossen werden, um diesen äußeren Einflüssen, insbesondere der Witterung, zu entziehen.

Die Erfindung läßt sich dahingehend weiterbilden, dass an dem gemeinsamen Grund- oder Nabenkörper konzentrisch zu jeder Laufbahn für je ein Blattlager zusätzlich je ein oder mehrere Befestigungsmittel für wenigstens eine Abdeckplatte oder für einen Lagerschild vorgesehen sind, insbesondere gegenüber dem Grund- oder Nabenkörper nach innen verschoben, also zu dessen Zentrum hin. Derartige Abdeckplatten oder Lagerschilde können einen Abschluß innerhalb der ringförmigen Großwälzlager, insbesondere innerhalb deren Innenringe, bewirken. Sie können damit ggf. zu einer weiteren Versteifung der Gesamtkonstruktion beitragen und/oder als Montageplattform dienen, bspw. für einen oder mehrere Antriebsmotoren.

Zur Montage derartiger Abdeckplatten oder Lagerschilde vorgesehene Befestigungsmittel können als kranzförmig um die betreffende Drehachse verteilt angeordnete Befestigungsbohrungen ausgebildet sein, welche sodann eine mannigfaltige Verschraubung zwischen den beteiligten Teilen herstellen.

Die Erfindung erlaubt eine Weiterbildung dahingehend, dass eine der in den Grund- oder Nabenkörper eingearbeiteten Laufbahn gegenüber liegende Laufbahn in einem Ring eingearbeitet ist, insbesondere in einen konvexen Oberflächenbereich desselben. Eine andere Möglichkeit wäre, diese zweite Laufbahn stattdessen in den Umfang einer Kreisscheibe einzuarbeiten. Diese Anordnung bringt allerdings zumeist ein größeres Gewicht mit sich und kann daher zwar in speziellen Anwendungsfällen von Vorteil sein, insbesondere wenn ein hermetischer Abschluß des Grundkörpers auch innerhalb eines derartigen Drehanschlusses gewünscht ist; in vielen Anwendungsfällen jedoch, wo diese Überlegung keine Rolle spielt, kann stattdessen mittels einer ringförmigen Konstruktion des verdrehbaren Großwälzlagerteils Gewicht eingespart werden.

Bei der Erfindung ist an einem eine Laufbahn aufweisenden Ring konzentrisch zu der Laufbahn für die Wälzkörper des betreffenden Wälzlagers zusätzlich je eine vorzugsweise rundum laufende Zahnreihe vorgesehen. Auch diese Zahnreihe dient der Drehverstellung des an diesen Ring angeschlossenen Maschinenteils.

Sofern an dem Grundkörper - dieser Verzahnung benachbart - ebenfalls eine Verzahnung vorgesehen ist, so empfiehlt die Erfindung, die Zähnezahl $z_1$ der Verzahnung an dem Grundkörper geringfügig unterschiedlich gegenüber der Zähnezahl $z_2$ an dem betreffenden Ring zu wählen, also $z_1 \neq z_2$, aber $z_1 \approx z_2$. Dies schafft die Möglichkeit, mittels eines oder mehrerer, in beide Verzahnungen gemeinsam eingreifender Zahnräder mit jeweils einheitlicher Zähnezahl $z_3$ eine Drehverstellung zu bewirken.

Eine solche Zahnreihe an einem Ring oder einem scheibenförmigen Drehteil kann gegenüber der betreffenden Laufbahn radial zu der betreffenden Drehachse verschoben sein, vorzugsweise in Richtung zu der betreffenden Drehachse hin. Hier hat sich vorzugsweise eine Anordnung bewährt, wobei die betreffende Laufbahn eines Rings an dessen Außenseite angeordnet ist, während sich seine Verzahnung an seiner Innenseite befindet, also in radialer Hinsicht zur betreffenden Drehachse hin verschoben.

Wie weiter oben bereits ausgeführt, kann es Anwendungsfälle geben, wobei einer scheibenförmigen Geometrie des gegenüber dem Grundkörper verdrehbaren Teils der Vorzug gegenüber einer ringförmigen Geometrie zu geben ist, und für einen derartigen Anwendungsfall sieht die Erfindung vor, dass der Ring mit einer Abdeckplatte oder einem Lagerschild versehen, verbunden oder integriert ist. Eine solche Abdeckplatte bzw. ein solcher Lagerschild wiederum kann in seiner Mitte eine Durchgangsausnehmung aufweisen, aber auch ohne Ausnehmung durchgehend ausgebildet sein.

Eine bevorzugte Konstruktionsvorschrift sieht vor, dass an wenigstens einer Abdeckplatte oder an wenigstens einem Lagerschild eine Antriebseinrichtung vorgesehen ist, insbesondere ein Antriebsmotor festgelegt und/oder ein Antriebsritzel gelagert oder geführt ist. Damit läßt sich über eine derartige Abdeckplatte bzw. über einen derartigen Lagerschild ein kräftemäßiger Rückschluß bewirken, um eine definierte Verstellung zu erreichen.

Ein weiteres Merkmal der Erfindung besteht darin, dass die Antriebseinrichtung, insbesondere der Antriebsmotor und/oder das Antriebsritzel konzentrisch zu der Drehachse der betreffenden Wälzlagerung angeordnet ist. Dadurch ergibt sich eine Anordnung ideal konzentrisch bzw. koaxial zu der betreffenden Drehachse, die demnach die geringstmögliche Unwucht mit sich bringt und daher einen besonders ruhigen Lauf aller beteiligten Drehteile nach sich zieht. Im Übrigen kann ein konzentrischer Antrieb mit einem Sonnenrad gekoppelt sein, welches die Drehbewegung in ein Zahnradgetriebe einleitet.

In letzterem Fall bietet sich eine Weiterbildung dahingehend an, dass in dem Ringraum zwischen der Außenverzahnung des Antriebsritzels bzw. Sonnenrades, den Abdeckplatten oder Lagerschilden und der Innenverzahnung des verdrehbaren Rings mehrere Planetenräder angeordnet sind. Dadurch erhält die Anordnung die Charakteristik eines Planetengetriebes.

Diese Planetenräder können fliegend, d.h. steglos, gelagert sein. Mangels eines Stegs oder Planetenradträgers wird einerseits die Gesamtanordnung weiter vereinfacht, und andererseits kann dadurch Gewicht eingespart werden.

Um noch mehr Gewicht einzusparen, können die Planetenräder selbst hohl ausgebildet sein. Dabei ist zu beachten, dass bei einem Planetengetriebe die Zahndifferenz zwischen Sonnenrad und Hohlrad Einfluß auf das Übersetzungsverhältnis hat. Sofern daher eine besonders große Zahndifferenz gewünscht wird, muß der Durchmesser des Sonnenrades deutlich kleiner gewählt werden als der Durchmesser des Hohlrades, mit der Folge, dass die Planetenräder, welche mit dem Sonnenrad einerseits und dem Hohlrad andererseits kämmen, einen sehr großen Durchmesser erhalten, der vorzugsweise größer ist als der Durchmesser des Sonnenrades. In einem solchen Fall läßt sich eine deutliche Gewichtsreduzierung erreichen, wenn die Planetenräder hohl, insbesondere ringförmig ausgebildet sind. Der Hohlraum kann bspw. als Reservoir für ein Schmiermittel, insbesondere Schmierfett, verwendet werden.

Sofern die Planetenräder mit den Innenverzahnungen sowohl an der Innenseite des Rings als auch an der Innenseite der Ausnehmung in dem Grund- oder Nabenkörper kämmen, läßt sich eine noch deutlichere Getriebeübersetzung erreichen, insbesondere nach Art eines Wolfromgetriebes; hierfür sollte - wie bereist weiter oben ausgeführt - die Zahl $z_2$ der Zähne der Verzahnung an der Innenseite des Rings und die Zahl $z_1$ der Zähne der Verzahnung an der Innenseite der betreffenden Ausnehmung in dem Grund- oder Nabenkörper geringfügig voneinander abweichen: $z_1 \neq z_2$, wobei $z_1 \approx z_2$.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1   eine teilweise abgebrochene Schnittansicht durch eine erfindungsgemäße Nabe einer Winkraftanlage; sowie

Fig. 2   eine der Fig. 1 entsprechende Ansicht einer abgewandelten Ausführungsform der Erfindung.

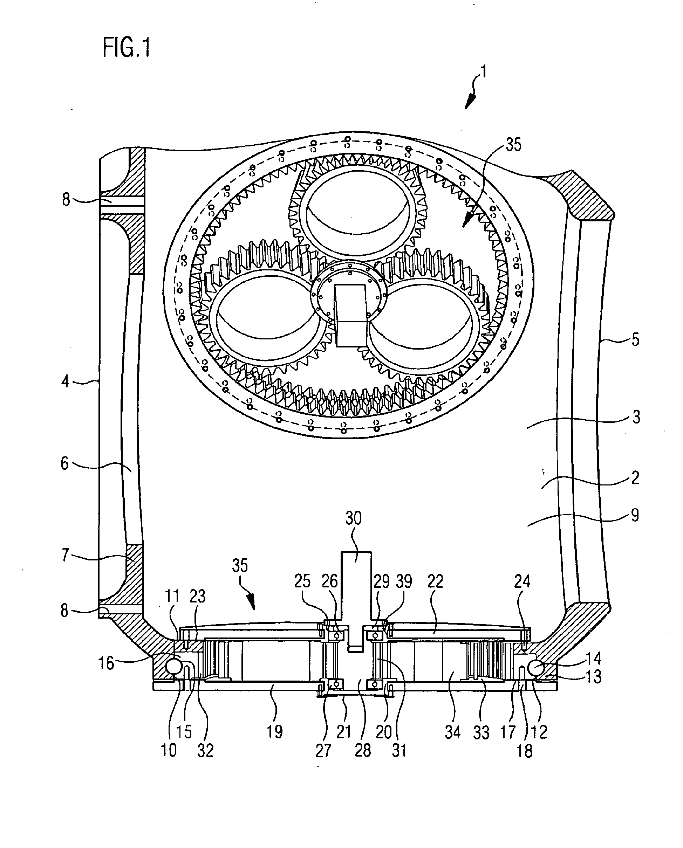

In Fig. 1 ist beispielhaft für eine erfindungsgemäße Vorrichtung zur Verstellung mehrerer Elemente relativ zueinander eine Nabe 1 einer Windkraftanlage dargestellt. In der abgebrochenen Schnittdarstellung erkennt man den Nabenkörper 2, der etwa die Gestalt eines mehrfach durchbrochenen Rings aufweist. Dieser Ring hat bspw. einen Mantel 3 mit etwa zylindrischer Struktur, der sich bevorzugt an beiden Stirnseiten 4, 5 verjüngt.

An der dem Maschinenhaus zugewandten Stirnseite 4 wird die dortige stirnseitige Öffnung 6 weiter verengt durch einen rundumlaufenden, nach innen vorspringenden Kragen 7. Darin sind mehrere Befestigungsbohrungen 8 vorgesehen zur Festlegung an einer abtriebsseitigen Rotationseinrichtung, bspw. einem Hauptlager der Windkraftanlage, einem Getriebeeingang oder einem Generator.

Demgegenüber kann die dem Maschinenhaus abgewandte Stirnseite 5 direkt verschlossen sein, oder durch eine nicht dargestellte Haube verschließbar sein, um den anströmenden Wind vom Innenraum 9 der Nabe 1 fernzuhalten.

In dem Mantel 3 dieses einstückigen Nabenkörpers 2 befinden sich mehrere Durchbrechungen 10 zum drehbaren Anschluß je eines nicht dargestellten Rotorblattes - im vorliegenden Fall bspw. deren drei.

Im Bereich des Randes 11 einer derartigen Durchbrechung 10 weicht die Gestalt des Nabenkörpers 2 von der idealen Zylinderform ab, und zwar derart, dass der rundum laufende Rand 11 einer Durchbrechung 10 vollständig innerhalb einer Ebene liegt.

In der konkaven Innenseite 12 einer Durchbrechung 10 gibt es eine in den Nabenkörper 2 eingeformte oder eingearbeitete, ringförmige Laufbahn 13 für darauf abrollende Wälzkörper 14. Im Fall kugelförmiger Wälzkörper 14 hat diese Laufbahn bspw. einen konkaven Querschnitt.

Das Pendant zu dieser Laufbahn 13 bildet eine andere, ringförmige Laufbahn 15 an der Außenseite eines in der Durchbrechung 10 angeordneten Rings 16, der seinerseits bspw. einen rechteckigen oder gar quadratischen Querschnitt aufweist und dank der Wälzkörper 14 gegenüber dem Nabenkörper 2 um die Mittelachse der betreffenden, mantelseitigen Durchbrechung 10 verdrehbar ist.

In der dem Innenraum 9 des Nabenkörpers 2 abgewandten, vorzugsweie ebenen Stirnseite 17 dieses verdrehbaren Rings 16 befinden sich mehrere, kranzförmig verteilt angeordnete Bohrungen 18 zum Anschluß eines Rotorblatts. Bevorzugt sind die Bohrungen 18 als mit Innengewinde versehene Sacklochbohrungen ausgebildet.

Dabei wird bevorzugt zwischen der nach außen weisenden Stirnseite 17 des verdrehbaren Rings 16 und einem daran befestigten Rotorblatt eine ebene, vorzugsweise ringförmige Abschlußplatte 19 eingelegt und durch Festziehen der betreffenden Schrauben eingeklemmt, welche den Innenraum 9 innerhalb des verdrehbaren Rings 16 in diesem Bereich dicht abschließt. Eine zentrale Ausnehmung 20 in der Mitte der Abschlußplatte 19 kann durch eine darin eingreifende Verschlußkappe 21 verschlossen sein.

Eine ähnliche Abschlußplatte 22 ist an der dem Innenraum 9 zugewandten Innenfläche 23 des Randes 11 der Durchbrechung 10 festgelegt, insbesondere mittels Schrauben, welche Öffnungen in der Abschlußplatte 22 durchgreifen und in kranzförmig verteilt angeordnete, mit Innengewinde versehene Sacklochbohrungen 24 in der Innenfläche 23 des Randes 11 der Durchbrechung 10 eingeschraubt sind. Auch die Abschlußplatte 22 kann eine ringförmige Grundfläche aufweisen mit einer Ausnehmung bzw. Durchbrechung 39 in der Mitte.

In diese Durchbrechung 39 kann ein Ring 25 eingesetzt sein, der seinerseits an seinem Innenumfang den Außenring einer Wälzlagerung 26 aufnimmt. Eine ähnliche Wälzlagerung 27 befindet sich an der Innenseite der Verschlußkappe 21. Die Innenringe dieser beiden Wälzlagerungen 26, 27 stützen ein verzahntes Sonnenrad 28 in um eine zentrale Achse verdrehbarer Art. Das Sonnenrad 28 hat in seiner dem Innenraum 9 des Nabenkörpers 2 zugekehrten Stirnseite 29 eine zentrale Ausnehmung, bspw. mit mehreckigem Querschnitt, insbesondere zur verdrehfesten Ankopplung eines Antriebsmotors 30, bspw. zum Einstecken einer Motorabtriebswelle oder eines Vierkants oder Sechskants od. dgl. am Ende eines Rotationskörpers, der von einem nicht dargestellten Motor antreibbar ist.

Das Sonnenrad 28 weist auf seinem Außenumfang eine rundum laufende Verzahnung 31 auf. Eine Verzahnung 32 mit gleichem Modul befindet sich an der radial innen liegenden Seite des verdrehbaren Rings 16, der Verzahnung 31 des Sonnenrades 28 zugekehrt.

Da die beiden Abschlußplatten 19, 22 einen Abstand aufweisen, verbleibt zwischen diesen Abschlußplatten 19, 22 sowie den Verzahnungen 31, 32 an dem Sonnenrad 28 einerseits und an der radial innen liegenden Seite des verdrehbaren Rings 16 ein etwa ringförmiger Hohlraum 33, worin mehrere verzahnte Planetenräder 34 aufgenommen sind, und zwar je nach Ausführungsform fliegend gelagert bzw. steglos geführt oder an einem Steg oder einer Abschlußplatte 19, 22 gelagert.

Zu diesem Zweck entspricht der Teilkreisdurchmesser $d_P$ eines verzahnten Planetenrades 34 der Differenz der Teilkreisdurchmesser $d_S$, $d_H$ der Verzahnungen 31, 32 an dem Sonnenrad 28 einerseits und an der radial innen liegenden Seite des verdrehbaren Rings 16 andererseits: $d_P = d_H - d_S$.

Dank der fliegenden Lagerung können die Planetenräder 34 hohl ausgebildet sein.

Durch Drehantrieb des Sonnenrades 28 mittels des Antriebsmotors 30 werden die Planetenräder 34 zum Umlauf um das Sonnenrad 28 gezwungen, wobei der über seine Verzahnung 32 damit kämmende Ring 16 in eine langsame Drehbewegung versetzt wird.

Somit ergibt sich die Struktur eines Planetengetriebes 35 mit Sonnenrad S, 28 Planetenrädern P, 34 und dem verdrehbaren Ring 16 als Hohlrad H. Die Standardübersetzung dieses Planetengetriebes $i_{12}$ ist definiert durch den Quotienten der Zähnezahlen H/S des Sonnenrades S und des Hohlrades H, bzw. des Quotienten ihrer Teilkreisdurchmesser $d_H/d_S$: $i_{12} = H/S = d_H/d_S$. Sofern die Planetenräder 34 bspw. an der Abschlußplatte 22 gelagert sind, gilt für das Drehzahlverhältnis $n_H/n_S = 1/i_{12} = S/H = d_S/d_H$, also eine um $1/i_{12}$ gegenüber der Antriebsdrehzahl $n_S$ verminderten Drehzahl $n_H$.

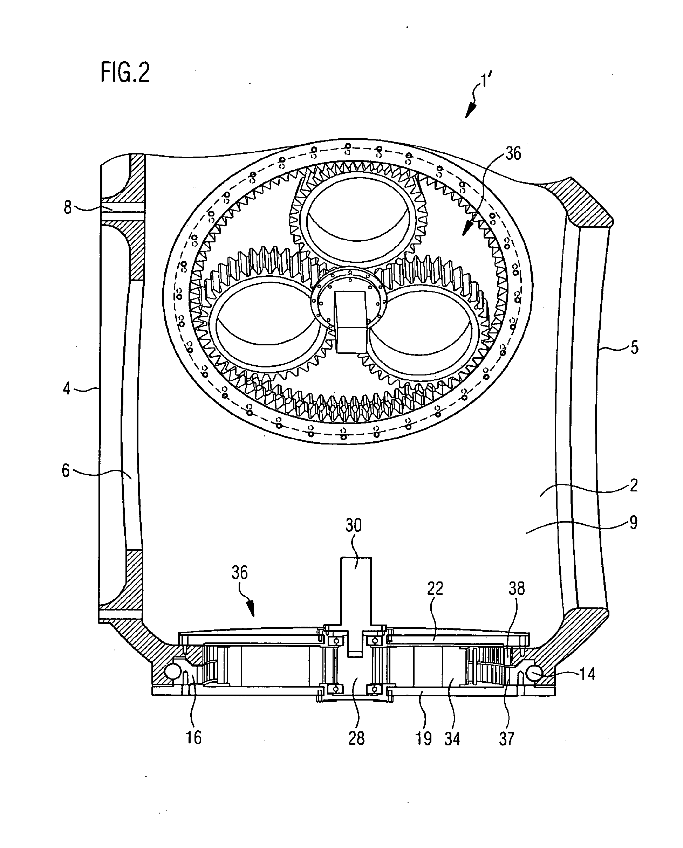

Diese Drehzahl $n_H$ läßt sich bei der Nabe 1' nach Fig. 2 weiter reduzieren durch Verwendung eines Wolfromgetriebes 36 anstelle des Planetengetriebes 35 aus Fig. 1. Das Wolfromgetriebe 36 unterscheidet sich von dem Planetengetriebe 35 vor allem im Bereich des Hohlrades H:

Während die Verzahnung 32 des Hohlrades H bei dem Planetengetriebe 35 vollständig an dem verdrehbaren Ring 16 angeordnet und also in axialer Richtung ungeteilt ist, so weist das Wolfromgetriebe 36 im Bereich des Hohlrades H zwei in axialer Richtung voneinander getrennte Verzahnungensbereiche 37, 38 auf. Davon befindet sich der in Fig. 2 untere Verzahnungsbereich 37 wiederum an der radial innen liegenden Seite des verdrehbaren Rings 16, der obere Verzahnungsbereich 38 jedoch nicht. Dieser ist stattdessen an der radial innen liegenden Seite des Randes 11 einer Durchbrechung 10 in dem Nabenkörper 2 angeordnet.

Ferner sind bei einer bevorzugten Ausführungsform die Teilkreisdurchmesser $d_1$, $d_2$ dieser beiden Verzah-

nungsbereiche 37, 38 identisch.

Allerdings unterscheiden sich die Zähne $H_1$, $H_2$ in beiden Verzahnungsbereichen 37, 38 geringfügig voneinander: $H_1 \neq H_2$, $H_1 \approx H_2$, mit $\Delta Z = H_1 - H_2$.

Daraus ergibt sich etwa ein Übersetzungsverhältnis $n_H/n_S$:

$$n_H/n_S = \frac{S * (H_1 - H_2)}{H_1 * (H_1 + S)} ,$$

welches deutlich größer ist als bei dem Planetengetriebe 35 nach Fig. 1. Aufgrund der starken Drehzahlübersetzung und der daraus folgenden starken Drehmomentuntersetzung genügt bei dem Wolfromgetriebe 36 ein weitaus kleinerer und leistungsschwächerer Antriebsmotor 30 als bei dem reinen Planetengetriebe 35 nach Fig. 1.

Sofern die Zahndifferenz $\Delta Z = H_1 - H_2$ gleich der Anzahl p der Planetenräder 34 ist: $\Delta Z = H_1 - H_2 = p$, können einteilige Planetenräder 34 verwendet werden, die in etwa äquidistanten Abständen um das zentrale Sonnenrad 28 herum angeordnet sind. Falls gilt: $\Delta Z = H_1 - H_2 \neq p$, muß wenigstens ein Planetenrad 34 zwei gegeneinander veretzte Verzahnungsbereiche aufweisen. Dies läßt sich jedoch mit geringem Aufwand dadurch realisieren, dass zwei Zahnrad-Hülsen mit je einem einheitlichen Verzahnungsbereich in versetztem Zustand drehfest auf einem Zentralkörper oder auf einer zentralen Hülse aufgesteckt sind. Eine solche drehfeste Verbindung kann ihrerseits bspw. durch ineinandergreifende Verzahnungen zwischen Zentralkörper oder -hülse einerseits und Zahnrad-Hülsen andererseits bewirkt werden.

Bezugszeichenliste

| 1 | Nabe | 26 | Wälzlagerung |
|---|---|---|---|
| 2 | Nabenkörper | 27 | Wälzlagerung |
| 3 | Mantel | 28 | Sonnenrad |
| 4 | Stirnseite | 29 | Stirnseite |
| 5 | Stirnseite | 30 | Antriebsmotor |
| 6 | Öffnung | 31 | Verzahnung |
| 7 | Kragen | 32 | Verzahnung |
| 8 | Befestigungsbohrung | 33 | Hohlraum |
| 9 | Innenraum | 34 | Planetenrad |
| 10 | Durchbrechung | 35 | Planetengetriebe |
| 11 | Rand | 36 | Wolfromgetriebe |
| 12 | Innenseite | 37 | Verzahnungsbereich |
| 13 | Laufbahn | 38 | Verzahnungsbereich |
| 14 | Wälzkörper | 39 | Durchbrechung |
| 15 | Laufbahn | | |
| 16 | Ring | | |
| 17 | Stirnseite | | |
| 18 | Bohrung | | |
| 19 | Abschlußplatte | | |
| 20 | Ausnehmung | | |
| 21 | Verschlußkappe | | |
| 22 | Abschlußplatte | | |
| 23 | Innenfläche | | |
| 24 | Durchbrechung | | |
| 25 | Ring | | |

**Patentansprüche**

**1.** Nabe (1) einer Windkraftanlage mit um ihre Längsachsen verstellbaren Rotorblättern, die mittels als Wälzlager ausgebildeten Blattlagern an der Nabe (1) gelagert sind, wobei die Außenringe wenigstens zweier Blattlager einstückig mit dem Nabenkörper (2) ausgebildet sind, so dass wenigstens je eine Laufbahn (13) mehrerer Blattlager mit unterschiedlich orientierten Drehachsen an der konkaven Innenseite (12) von mehreren Durchbrechungen (10) in einem gemeinsamen Nabenkörper (2) ausgebildet ist, **dadurch gekennzeichnet, dass** das Pendant zu einer solchen Laufbahn (13) durch eine andere, ringförmige Laufbahn (15) an der Außenseite eines Rings (16) gebildet ist, der in der betreffenden Durchbrechung (10) in dem gemeinsamen Nabenkörper (2) angeordnet ist und der an seiner dem Innenraum (9) des Nabenkörpers (2) abgewandten Stirnseite (17) mehrere, kranzförmig verteilt angeordnete Bohrungen (18) zum Anschluss eines Rotorblattes aufweist, wobei an dem eine Laufbahn (15) aufweisenden Ring (16) konzentrisch zu der Laufbahn (15) für die Wälzkörper (14) zusätzlich eine vorzugsweise rundum laufende Zahnreihe (37) vorgesehen ist.

2. Vorrichtung zur mehrachsigen Verstellung mehrerer Elemente relativ zueinander, insbesondere Nabe (1) einer Windkraftanlage, wobei die Elemente, insbesondere Rotorblätter einer Windkraftanlage, über mittenfreie Großwälzlager mit unterschiedlich orientierten Drehachsen gegeneinander verdrehbar sind, wobei wenigstens zwei mittenfreie Großwälzlager nur über jeweils einen eigenen Ring (16) verfügen, während ihre dem gegenüber verdrehbaren, doppelt zusammenhängenden Teile durch Bearbeiten oder Formgebung eines gemeinsamen Grundkörpers gebildet und dadurch miteinander vereinigt sind, insbesondere durch Bearbeiten oder Formgebung des Nabenkörpers (2) einer Windkraftanlage, wobei wenigstens je eine Laufbahn (13) mehrerer Großwälzlager mit unterschiedlich orientierten Drehachsen durch Bearbeiten oder Formgebung eines konkav gewölbten Bereichs im Bereich der Innenseite einer den Mantel eines hohl oder hülsenförmig ausgebildeten, gemeinsamen Grundkörpers vorzugsweise vollständig durchsetzenden Ausnehmung (10) gebildet ist, **dadurch gekennzeichnet, dass** das Pendant zu einer solchen, in den Grundkörper eingearbeiteten Laufbahn (13) durch eine andere, dieser gegenüber liegende Laufbahn (15) an der Außenseite eines Rings (16) gebildet ist, der in der betreffenden Ausnehmung (10) in dem gemeinsamen Grundkörper angeordnet ist und der an seiner dem Innenraum (9) des Grundkörpers abgewandten Stirnseite (17) mehrere, kranzförmig verteilt angeordnete Bohrungen (18) zum Anschluss eines Maschinenteils aufweist, wobei an dem eine Laufbahn (15) aufweisenden Ring (16) konzentrisch zu der Laufbahn (15) für die Wälzkörper (14) zusätzlich eine vorzugsweise rundum laufende Zahnreihe (37) vorgesehen ist.

3. Nabe (1) oder Verstellvorrichtung nach Anspruch 1 oder 2, **dadurch gekennzeichnet, dass** wenigstens je eine Laufbahn (15) mehrerer Großwälzlager mit unterschiedlich orientierten Drehachsen durch Bearbeiten oder Formgebung eines gemeinsamen Grundkörpers gebildet ist, insbesondere durch Bearbeiten oder Formgebung des Nabenkörpers (2) einer Windkraftanlage.

4. Nabe (1) oder Verstellvorrichtung nach einem der Ansprüche 1 bis 3, **dadurch gekennzeichnet, dass** der gemeinsame Grund- oder Nabenkörper (2) im Wesentlichen hohl oder hülsenförmig ausgebildet ist, insbesondere entsprechend einer - mit Durchbrechungen versehenen - Mantelfläche eines punkt- oder rotationssymmetrischen Körpers.

5. Nabe (1) oder Verstellvorrichtung nach einem der vorhergehenden Ansprüche, **dadurch gekennzeichnet, dass** eine Laufbahn (13) des Grund- oder Nabenkörpers (2) in einen konkaven Oberflächenbereich (12) desselben eingearbeitet ist.

6. Nabe (1) oder Verstellvorrichtung nach Anspruch 5, **dadurch gekennzeichnet, dass** ein eine Laufbahn (13) aufweisender Bereich (11) des Grund- oder Nabenkörpers (2) durch einen konkav gewölbten Bereich im Bereich der Innenseite (12) einer den Mantel eines hohl oder hülsenförmig ausgebildeten Grund- oder Nabenkörpers (2) vorzugsweise vollständig durchsetzenden Ausnehmung (10) gebildet ist.

7. Nabe (1) oder Verstellvorrichtung nach einem der vorhergehenden Ansprüche, **dadurch gekennzeichnet, dass** an dem gemeinsamen Grund- oder Nabenkörper (2) neben einer Laufbahn (13) für die Wälzkörper (14) je eines Wälzlagers, insbesondere Blattlagers, eine vorzugsweise in sich geschlossene Reihe von Zähnen (38) vorgesehen ist.

8. Nabe (1) oder Verstellvorrichtung nach einem der vorhergehenden Ansprüche, **dadurch gekennzeichnet, dass** an dem gemeinsamen Grund- oder Nabenkörper (2) konzentrisch zu jeder Laufbahn (13) für je ein Blattlager zusätzlich je ein oder mehrere Befestigungsmittel für wenigstens eine Abdeckplatte (22) oder für einen Lagerschild vorgesehen sind, insbesondere gegenüber dem Grund- oder Nabenkörper (2) nach innen verschoben, also zu dessen Zentrum hin, vorzugsweise in Form von kranzförmig um die betreffende Drehachse verteilt angeordnete Befestigungsbohrungen.

9.  Nabe (1) oder Verstellvorrichtung nach einem der vorhergehenden Ansprüche, **dadurch gekennzeichnet, dass** eine der in den Grund- oder Nabenkörper (2) eingearbeiteten Laufbahn (13) gegenüber liegende Laufbahn (15) in einem Ring (16) eingearbeitet ist, insbesondere in einen konvexen Oberflächenbereich desselben.

10. Nabe (1) oder Verstellvorrichtung nach einem der vorhergehenden Ansprüche, **dadurch gekennzeichnet, dass** der Ring (16) mit einer Abdeckplatte (19) oder einem Lagerschild versehen, verbunden oder integriert ist.

11. Nabe (1) oder Verstellvorrichtung nach einem der vorhergehenden Ansprüche, **dadurch gekennzeichnet, dass** in dem Ringraum (33) zwischen der Außenverzahnung eines zentralen Antriebsritzels oder eines mit einem Antriebsmotor (30) gekoppelten Sonnenrades (28), den Abdeckplatten (19,22) oder Lagerschilden und der Innenverzahnung (32,38) des verdrehbaren Rings (16) mehrere Planetenräder (34) angeordnet sind.

12. Nabe (1) oder Verstellvorrichtung nach Anspruch 11, **dadurch gekennzeichnet, dass** die Planetenräder (34) hohl ausgebildet und/oder fliegend, d.h. steglos, gelagert sind.

13. Nabe (1) oder Verstellvorrichtung nach einem der Ansprüche 11 oder 12, **dadurch gekennzeichnet, dass** die Planetenräder (34) mit den Innenverzahnungen (38,37) sowohl an der Innenseite des Rings (16) als auch an der Innenseite (12) der Ausnehmung (10) in dem Grund- oder Nabenkörper (2) kämmen.

14. Nabe (1) oder Verstellvorrichtung nach Anspruch 13, **dadurch gekennzeichnet, dass** die Zahl $H_1$, $H_2$ der Zähne der Verzahnungen (37,38) an der Innenseite des Rings (16) und an der Innenseite (12) der betreffenden Ausnehmung (10) in dem Grund- oder Nabenkörper (2) geringfügig voneinander abweicht: $H_1 \neq H_2$, $H_1 \approx H_2$.

**Claims**

1.  Hub (1) of a wind turbine having rotor blades adjustable about their longitudinal axes and mounted to the hub (1) by means of blade bearings formed as antifriction bearings, wherein the outer rings of at least two blade bearings are embodied in one piece with the hub body (2), such that at least one raceway (13) each of several blade bearings having differently oriented axes of rotation is formed at a concave inner side (12) of several breaches in a common hub body (2), **characterized in that** the pendant to such a raceway (13) is formed by another annular raceway (15) at the outer side of a ring (16) which is arranged in the respective recess (10) in the common hub body (2) and which comprises at its end face (17) facing away from the interior (9) of the hub body (2), several coronally distributed bores (18) for the connection of a rotor blade, whereby at a ring (16) comprising a raceway (15), a preferably circular row of teeth (37) is additionally provided concentric with the raceway (15).

2.  Device for the multi-axial adjustment of a plurality of elements relative to one another, particularly a hub (1) of a wind turbine, wherein the elements, particularly rotor blades of a wind turbine, each are rotatable with respect to each other via respective annular large rolling bearings having differently oriented axes of rotation, wherein at least two annular large rolling bearings comprise only one ring (16) each, while their other parts rotatable with respect thereto are formed by processing or shaping a common base body and are unified thereby, particularly by processing or shaping the hub body (2) of a wind turbine, whereby at least one raceway (13) of several bearings with differently oriented axes of rotation are formed by processing or shaping a concavely vaulted area in the region of the inner side of a recess (10) penetrating the lateral surface of a hollow or sleeve-shaped common base body preferably entirely, **characterized in that** the pendant to such a raceway (13) machined into the base body is formed by another raceway (15) opposite to that raceway (13), formed at the outer side of a ring (16) which is arranged in the respective recess (10) in the common base body and which comprises at its end face (17) facing away from the interior of the base body, several coronally distributed bores (18) for the connection of a machine part, whereby at a ring (16) comprising a raceway (15), a preferably circular row of teeth (37) is additionally provided concentric with the raceway (15).

3.  Hub (1) or adjusting device according to either claim 1 or claim 2, **characterized in that** at least one raceway (15) of each of a plurality of bearings having differently oriented axes of rotation is formed by processing or shaping a common base body, particularly by processing or shaping the hub body (2) of a wind turbine.

4.  Hub (1) or adjusting device according to one of claims 1 to 3, **characterized in that** the common base body or hub body (2) is configured as substantially hollow or sleeve-shaped, particularly corresponding to a jacket surface - provided with through-holes - of a point-symmetric or rotationally symmetric body.

5. Hub (1) or adjusting device according to one of the preceding claims, **characterized in that** a raceway (13) of the base body or hub body (2) is machined into a concave surface region (12) of the latter.

6. Hub (1) or adjusting device according to claim 5, **characterized in that** a region (11) comprising a raceway (13) of the base body or hub body (2) is formed by a concavely curved region in the region of the inner side (12) of an opening (10) that preferably passes all the way through the jacket of a preferably hollow or sleeve-shaped base body or hub body (2).

7. Hub (1) or adjusting device according to one of the preceding claims, **characterized in that** a preferably continuous row of teeth (38) is provided on the common base body or hub body (2) next to a raceway (13) for the rolling elements (14) of a respective rolling bearing, particularly blade bearing.

8. Hub (1) or adjusting device according to one of the preceding claims, **characterized in that** for each blade bearing, a respective one or more fastening means for at least one cover plate (22) or for a bearing shield is additionally provided on the common base body or hub body (2) concentrically with each raceway (13), particularly offset inwardly in relation to the base body or hub body (2), i.e., toward the center thereof, preferably in the form of fastening bores arranged distributed coronally around the particular axis of rotation.

9. Hub (1) or adjusting device according to one of the preceding claims, **characterized in that** a raceway (15) disposed opposite the raceway (13) incorporated into the base body or hub body (2) is incorporated into a ring (16), particularly into a convex surface region thereof.

10. Hub (1) or adjusting device according to one of the preceding claims, **characterized in that** the ring (16) is provided with, connected to or integrated with a cover plate (19) or a bearing shield.

11. Hub (1) or adjusting device according to one of the preceding claims, **characterized in that** a plurality of planet gears (34) is arranged in the annular space (33) between the outer teeth of a central drive pinion or of a sun gear (28) coupled to the drive motor (30), the cover plate (19, 22) or bearing shield, and the inner teeth (32, 38) of the rotatable ring (16).

12. Hub (1) or adjusting device according to claim 11, **characterized in that** the planet gears (34) are configured as hollow, and/or are mounted in a webless fashion, i.e., without a spider.

13. Hub (1) or adjusting device according to one of claims 11 to 12, **characterized in that** the planet gears (34) mesh with the inner teeth (38, 37) both on the inner side of the ring (16) and on the inner side (12) of the opening (10) in the base body or hub body (2).

14. Hub (1) or adjusting device according to claim 13, **characterized in that** the numbers $H_1$, $H_2$ of teeth in the sets of teeth (37, 38) on the inner side of the ring (16) and on the inner side (12) of the particular opening (10) in the base body or hub body (2) differ slightly from each other: $H_1 \neq H_2$, $H_1 \approx H_2$.


**Revendications**

1. Moyeu (1) d'une éolienne comprenant des pales de rotor réglables autour de leur axes longitudinaux et montées sur le moyeu (1) au moyen de paliers de pale réalisés sous forme de roulements, les bagues extérieures d'au moins deux paliers de pale étant réalisées d'un seul tenant avec le corps de moyeu (2), de sorte qu'au moins respectivement un chemin de roulement (13) de plusieurs paliers de pale présentant des axes de rotation à orientation différente sur la face intérieure concave (12) de plusieurs ouvertures (10) est réalisé dans un corps de moyeu commun (2), **caractérisé en ce que** le pendant d'un tel chemin de roulement (13) est formé par un autre chemin de roulement (15) annulaire sur la face extérieure d'une bague (16) qui est disposée dans l'ouverture correspondante (10) dans le corps de moyeu commun (2) et qui présente sur sa face frontale (17) opposée à l'intérieur (9) du corps de moyeu (2) plusieurs trous (18) percés en couronne pour raccorder une pale de rotor, en outre une rangée de dents (37) de préférence périphérique étant prévue sur la bague (16) présentant un chemin de roulement (15) concentrique par rapport au chemin de roulement (15) pour les corps de roulement (14).

2. Dispositif permettant de régler les uns par rapport aux autres sur plusieurs axes plusieurs éléments, en particulier le moyeu (1) d'une éolienne, lesdits éléments, en particulier des pales de rotor d'une éolienne, pouvant tourner dans des sens opposés par l'intermédiaire de couronnes géantes d'orientation à centre libre présentant des axes de rotation à orientation différente, au moins deux couronnes géantes d'orientation à centre libre disposant seulement de respectivement une propre bague (16) tandis que leurs parties doublement adjacentes pouvant tourner par rapport à celle-ci par usinage ou formage d'un corps de base commun et de ce fait réunies, en particulier par usinage ou formage du corps de moyeu (2) d'une éolienne, au moins respectivement un chemin de roulement (13) de plusieurs couronnes géantes d'orientation présentant des axes de rotation à orientation différente est réalisé par usinage ou formage d'une zone concave dans la zone de la face intérieure d'un évidement (10) de préférence traversant entièrement l'enveloppe d'un corps de base commun, creux ou réalisé sous forme de manchon, **caractérisé en ce que** le pendant d'un tel chemin de roulement (13) intégré dans le corps de base est formé par un autre chemin de roulement (15) opposé à celui-ci sur la face extérieure d'une bague (16) qui est disposée dans l'évidement correspondant (10) dans le corps de base commun et qui présente sur sa face frontale (17) opposée à l'intérieur (9) du corps de base plusieurs trous (18) disposés en couronne pour raccorder une partie de machine, en outre une rangée de dents (37) de préférence périphérique étant prévue sur la bague (16) présentant un chemin de roulement (15) concentrique par rapport au chemin de roulement (15) pour les corps de roulement (14).

3. Moyeu (1) ou dispositif de réglage selon la revendication 1 ou 2, **caractérisé en ce qu'**au moins respectivement un chemin de roulement (15) de plusieurs couronnes géantes d'orientation présentant des axes de rotation à orientation différente est réalisé par usinage ou formage d'un corps de base commun, en particulier par usinage ou formage du corps de moyeu (2) d'une éolienne.

4. Moyeu (1) ou dispositif de réglage selon l'une des revendications 1 à 3, **caractérisé en ce que** le corps de base ou de moyeu commun (2) est réalisé essentiellement de manière creuse ou sous forme de manchon, en particulier selon une surface latérale, dotée d'ouvertures, d'un corps à symétrie ponctuelle ou de révolution.

5. Moyeu (1) ou dispositif de réglage selon l'une des revendications précédentes, **caractérisé en ce qu'**un chemin de roulement (13) du corps de base ou de moyeu (2) est intégré dans une zone de surface concave (12) de celui-ci.

6. Moyeu (1) ou dispositif de réglage selon la revendication 5, **caractérisé en ce qu'**une zone (11) du corps de base ou de moyeu (2) présentant un chemin de roulement (13) est formée par une zone concave dans la zone de l'intérieur (12) d'un évidement (10) de préférence traversant entièrement l'enveloppe d'un corps de base ou de moyeu (2) creux ou réalisé sous forme de manchon.

7. Moyeu (1) ou dispositif de réglage selon l'une des revendications précédentes, **caractérisé en ce qu'**une rangée de dents (38) de préférence autonome est prévue sur le corps de base ou de moyeu commun (2) à proximité d'un chemin de roulement (13) pour les corps de roulement (14) de respectivement un palier de roulement, en particulier d'un palier de pale.

8. Moyeu (1) ou dispositif de réglage selon l'une des revendications précédentes, **caractérisé en ce qu'**en outre respectivement un ou plusieurs moyens de fixation sont prévus pour au moins une plaque de recouvrement (22) ou pour un flasque sur le corps de base ou de moyeu (2) commun concentrique par rapport à chaque chemin de roulement (13) pour respectivement un palier de pale, en particulier déplacés vers l'intérieur par rapport au corps de base ou de moyeu (2), c'est-à-dire vers le centre, de préférence sous forme de trous de fixation disposés en couronne autour de l'axe de rotation correspondant.

9. Moyeu (1) ou dispositif de réglage selon l'une des revendications précédentes, **caractérisé en ce qu'**un chemin de roulement (15) opposé au chemin de roulement (13) intégré dans le corps de base ou de moyeu (2) est intégré dans une bague (16), en particulier dans une zone de surface convexe de celle-ci.

10. Moyeu (1) ou dispositif de réglage selon l'une des revendications précédentes, **caractérisé en ce que** la bague (16) est munie, reliée ou intégrée à une plaque de recouvrement (19) ou à un flasque.

11. Moyeu (1) ou dispositif de réglage selon l'une des revendications précédentes, **caractérisé en ce que** plusieurs roues satellites (34) sont disposées dans l'espace annulaire (33) entre la denture extérieure d'un pignon d'entraînement central ou d'une roue solaire (28) couplée à un moteur d'entraînement (30), les plaques de recouvrement (19, 22) ou les flasques et la denture intérieure (32, 38) de la bague (16) avec possibilité de rotation.

12. Moyeu (1) ou dispositif de réglage selon la revendication 11, caractérisé en ce les roues satellites (34) sont réalisées de manière creuse et/ou montées en porte-à-faux, c'est-à-dire sans support.

**13.** Moyeu (1) ou dispositif de réglage selon l'une des revendications 11 ou 12, **caractérisé en ce que** les roues satellites (34) s'engrènent avec les dentures intérieures (38, 37) aussi bien sur la face intérieure de la bague (16) que sur la face intérieure (12) de l'évidement (10) dans le corps de base ou de moyeu (2).

**14.** Moyeu (1) ou dispositif de réglage selon la revendication 13, **caractérisé en ce que** le nombre $H_1$, $H_2$ de dents des dentures (37, 38) sur la face intérieure de la bague (16) et sur la face intérieure (12) de l'évidement correspondant (10) dans le corps de base ou de moyeu (2) diffère légèrement l'un de l'autre : $H_1 \neq H_2$, $H_1 - H_2$.

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6015264 A